# EUROPÄISCHE PATENTANMELDUNG

(11) **EP 3 065 156 A1**
(43) Veröffentlichungstag der Anmeldung: **07.09.2016**
(21) Anmeldenummer: 16155674.1
(22) Anmeldetag: 15.02.2016
(51) Int. Cl.: H01H 39/00

(54) **ELEKTRISCHE KURZSCHLIESSEREINRICHTUNG**

(30) Priorität: 02.03.2015 DE 102015203645
(71) Anmelder: Siemens Aktiengesellschaft, 80333 München (DE)
(72) Erfinder: Schremmer, Frank, 90768 Fürth (DE); Zenkner, Andreas, 90587 Obermichelbach (DE)

(57) **Zusammenfassung**

Die Erfindung bezieht sich unter anderem auf eine elektrische Kurzschließereinrichtung (10) mit einer elektrischen Kontaktanordnung, die aufweist: einen ersten und zweiten Kontakt (20, 30), die voneinander durch eine Gasstrecke getrennt sind, ein Bewegkontaktstück (45), das in einer Trennstellung vom zweiten Kontakt (30) getrennt ist und in einer Kontaktstellung den ersten und zweiten Kontakt (20, 30) miteinander verbindet, und einen Antrieb (50) zum Bewegen des Bewegkontaktstücks (45) von der Trennstellung in die Kontaktstellung.

Erfindungsgemäß ist vorgesehen, dass das Bewegkontaktstück (45) im Inneren eines aus nichtleitendem Material bestehenden Isolationsrohres (40) angeordnet ist.

## Beschreibung

Die Erfindung bezieht sich auf elektrische Kurzschließereinrichtungen sowie auf Transistoreinrichtungen und Umrichter, insbesondere Multilevelumrichter, die mit einer oder mehreren Kurzschließereinrichtungen ausgestattet sind.

Die internationale Patentanmeldung WO 2011/107363 A1 offenbart eine elektrische Kurzschließereinrichtung mit einer elektrischen Kontaktanordnung, die einen ersten und einen zweiten Kontakt aufweist. Der erste und zweite Kontakt sind voneinander durch eine Luftstrecke getrennt. Die vorbekannte Kurzschließereinrichtung weist ein Bewegkontaktstück auf, das in einer Trennstellung vom zweiten Kontakt getrennt ist und in einer Kontaktstellung den ersten und zweiten Kontakt miteinander verbindet. Darüber hinaus ist die vorbekannte Kurzschließereinrichtung mit einem Antrieb ausgestattet, der das Bewegkontaktstück von der Trennstellung in die Kontaktstellung bewegen kann. Bei der vorbekannten Kurzschließereinrichtung sind zwei elektrisch isolierende Seitenleisten vorhanden, die eine mechanische Verbindung zwischen den beiden elektrischen Kontakten bewirken und die Kontakte auf Abstand halten.

Der Erfindung liegt die Aufgabe zugrunde, eine Kurzschließereinrichtung der eingangs angegebenen Art hinsichtlich des Verhaltens beim Kurzschließen der beiden elektrischen Kontakte zu verbessern.

Diese Aufgabe wird erfindungsgemäß durch eine Kurzschließereinrichtung mit den Merkmalen gemäß Patentanspruch 1 gelöst. Vorteilhafte Ausgestaltungen der erfindungsgemäßen Kurzschließereinrichtung sind in Unteransprüchen angegeben.

Danach ist erfindungsgemäß vorgesehen, dass das Bewegkontaktstück im Inneren eines aus nichtleitendem Material bestehenden Isolationsrohres angeordnet ist.

Ein wesentlicher Vorteil der erfindungsgemäßen Kurzschließereinrichtung ist darin zu sehen, dass das erfindungsgemäß vorgesehene nichtleitende Isolationsrohr das Bewegkontaktstück nach außen vollständig umschließt, so dass im Falle eines durch das Bewegkontaktstück hervorgerufenen Kurzschlusses und im Falle eines zwischen dem ersten und zweiten Kontakt auftretenden Lichtbogens eine Lichtbogenausbreitung radial nach außen verhindert wird; denn der Lichtbogen verbleibt aufgrund der äußeren Abschirmung im Inneren des Isolationsrohrs und kann nicht nach außen gelangen.

Als besonders vorteilhaft wird es angesehen, wenn das Isolationsrohr aus faserverstärktem, insbesondere glasfaserverstärktem, Kunststoff besteht. Besonders geeignetes Kunststoffmaterial sind runde Rohre entsprechend IEC 61212-1 beispielsweise des Typs EP GC 21 bis 23.

Die Wandstärke des Isolationsrohrs liegt vorzugsweise in einem Bereich zwischen 20 und 50 mm.

Mit Blick auf eine optimale Verhinderung einer radialen Lichtbogenausbreitung wird es als besonders vorteilhaft angesehen, wenn das Isolationsrohr den ersten und zweiten Kontakt mechanisch verbindet und gemeinsam mit dem ersten und zweiten Kontakt nach außen verschließt.

Mit Blick auf eine möglichst schnelle Bewegung des Kontaktstücks bzw. auf ein möglichst schnelles Kurzschließen der elektrischen Kurzschließereinrichtung wird es als vorteilhaft angesehen, wenn die Kurzschließereinrichtung einen pyrotechnischen Antrieb aufweist, der bei Anliegen eines elektrischen Zündsignals gezündet wird.

Das Bewegkontaktstück wird von dem pyrotechnischen Antrieb vorzugsweise in eine lineare Schubbewegung innerhalb des Isolationsrohres versetzt und durch diese von der Trennstellung in die Kontaktstellung bewegt.

Bezüglich der Anordnung des Bewegkontaktstücks relativ zum Isolationsrohr wird es als vorteilhaft angesehen, wenn das Bewegkontaktstück koaxial zum Isolationsrohr angeordnet ist. Vorzugsweise sind das Isolationsrohr und das Bewegkontaktstück rotationssymmetrisch.

Mit Blick auf ein zuverlässiges elektrisches Kurzschließen der beiden Kontakte wird es als vorteilhaft angesehen, wenn sich das Bewegkontaktstück in Richtung des zweiten Kontakts konusförmig verjüngt und bei Erreichen der Kontaktstellung in einen formkomplementären Hülsenabschnitt des zweiten Kontakts einfährt.

Mit Blick auf minimale Herstellungskosten der Kurzschließereinrichtung wird es als vorteilhaft angesehen, wenn der erste und zweite Kontakt voneinander durch eine Luftstrecke getrennt sind.

Vorzugsweise bildet die Kurzschließereinrichtung einen Kurzschlussschalter zum Überbrücken von Submodulen eines Umrichters. Die Submodule können dabei beispielsweise als Halbbrücken- oder Vollbrückenschaltungen ausgebildet und zu mindestens einer Reihenschaltung miteinander verbunden sein.

Die Erfindung bezieht sich außerdem auf eine Transistoreinrichtung, insbesondere in Form eines Bipolartransistors mit isolierter Gate-Elektrode.

Erfindungsgemäß ist bezüglich einer solchen Transistoreinrichtung vorgesehen, dass diese mindestens eine Kurzschließereinrichtung, wie sie oben im Detail beschrieben worden ist, aufweist.

Bezüglich der Vorteile der erfindungsgemäßen Transistoreinrichtung sei auf die obigen Erläuterungen im Zusammenhang mit der erfindungsgemäßen Kurzschließereinrichtung verwiesen.

Die Erfindung bezieht sich darüber hinaus auf einen Umrichter, insbesondere einen Multilevelumrichter.

Bei einem solchen Umrichter ist erfindungsgemäß vorgesehen, dass dieser mindestens eine Kurzschließereinrichtung, wie sie oben im Detail beschrieben worden ist, aufweist.

Bezüglich der Vorteile des erfindungsgemäßen Umrichters sei auf die obigen Erläuterungen im Zusammenhang mit der erfindungsgemäßen Kurzschließereinrichtung verwiesen.

Vorzugsweise ist die Kurzschließereinrichtung zu einem der Submodule des Umrichters parallelgeschaltet. Besonders vorteilhaft ist es, wenn die Kurzschließereinrichtung zu einem Kondensator eines der Submodule parallel geschaltet ist oder über mindestens einen Transistor oder über mindestens eine Diode zu einem Kondensator eines der Submodule parallel geschaltet ist und nach einem Übergang des Bewegkontaktstücks von der Trennstellung in die Kontaktstellung den Kondensator des Submoduls kurzschließt.

Um alle Submodule eines Umrichters schnell und zuverlässig kurzschließen zu können, wird es als vorteilhaft angesehen, wenn alle Submodule des Umrichters jeweils mit einer entsprechenden Kurzschließereinrichtung ausgestattet sind.

Die Erfindung wird nachfolgend anhand von Ausführungsbeispielen näher erläutert; dabei zeigen beispielhaft
- Figur 1: ein Ausführungsbeispiel für eine elektrische Kurzschließereinrichtung in einer dreidimensionalen Darstellung schräg von der Seite,
- Figur 2: die Kurzschließereinrichtung gemäß Figur 1 im Querschnitt im geöffneten Zustand bzw. in einer elektrischen Trennstellung eines Bewegkontaktstücks der Kurzschließereinrichtung und
- Figur 3: die Kurzschließereinrichtung gemäß Figur 1 im kurzschließenden Zustand bzw. in einer Kontaktstellung des Bewegkontaktstücks der Kurzschließereinrichtung.

In den Figuren werden der Übersicht halber für identische oder vergleichbare Komponenten stets dieselben Bezugszeichen verwendet.

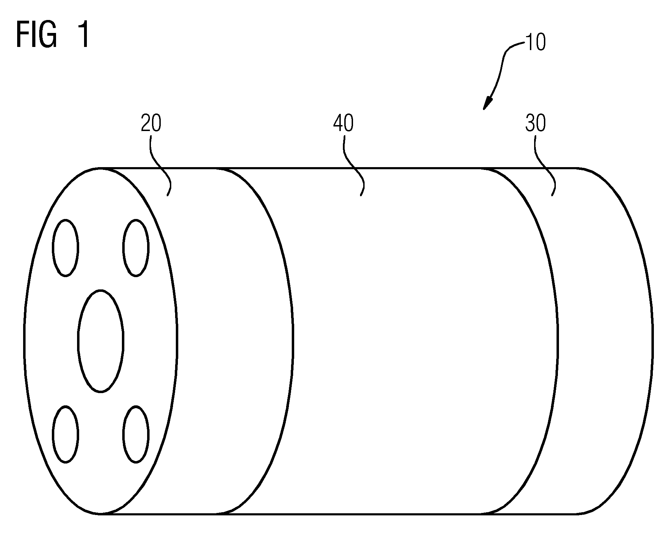

Die Figur 1 zeigt in einer dreidimensionalen Darstellung schräg von der Seite eine Kurzschließereinrichtung 10. Man erkennt einen ersten Kontakt 20 sowie einen zweiten Kontakt 30, der von dem ersten Kontakt 20 beabstandet ist. Eine mechanische Verbindung der beiden Kontakte 20 und 30 erfolgt durch ein Isolationsrohr 40, das das Innere der Kurzschließereinrichtung 10 im Bereich zwischen den beiden Kontakten 20 und 30 nach außen räumlich abschirmt.

Das Isolationsrohr 40 besteht aus einem nichtleitenden Material, vorzugsweise aus faserverstärktem, insbesondere glasfaserverstärktem, Kunststoff. Besonders geeignetes Kunststoffmaterial sind runde Rohre entsprechend IEC 61212-1 beispielsweise des Typs EP GC 21 bis 23.

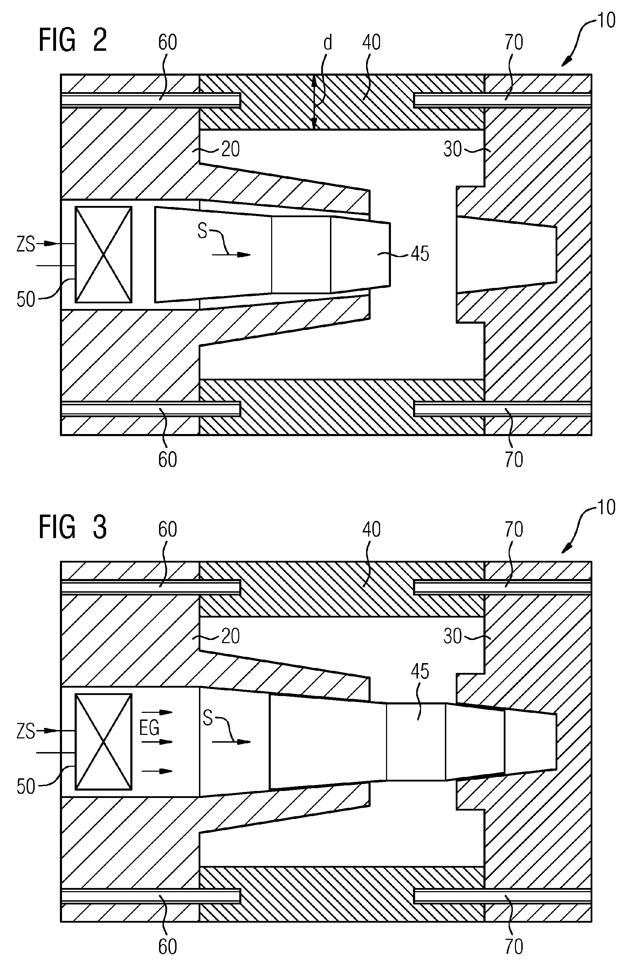

Die Figur 2 zeigt die Kurzschließereinrichtung 10 gemäß Figur 1 im Querschnitt. Man erkennt den ersten Kontakt 20 sowie den davon beabstandet angeordneten zweiten Kontakt 30. Darüber hinaus lässt sich das Isolationsrohr 40 erkennen, das räumlich zwischen den beiden Kontakten 20 und 30 angeordnet ist. Die Wandstärke des Isolationsrohres 40 ist in der Figur 2 mit dem Bezugszeichen d gekennzeichnet. Die Wandstärke d liegt vorzugsweise in einem Bereich zwischen 20 und 50 mm.

Die Kurzschließereinrichtung 10 gemäß Figur 2 weist ein Bewegkontaktstück 45 auf, das entlang einer Schieberichtung S beweglich ist und in der Darstellung gemäß Figur 2 nach rechts in Richtung des zweiten Kontakts 30 verschoben werden kann.

In der in der Figur 2 gezeigten Trennstellung des Bewegkontaktstücks 45 werden die beiden Kontakte 20 und 30 durch eine Gasstrecke, vorzugsweise eine Luftstrecke, elektrisch voneinander isoliert.

Darüber hinaus ist die Kurzschließereinrichtung 10 mit einem pyrotechnischen Antrieb 50 ausgestattet, der bei Anliegen eines elektrischen Zündsignals ZS aktivierbar ist und durch das Erzeugen von Verbrennungsgas bzw. Explosionsgas einen Überdruck erzeugen kann, durch den das Bewegkontaktstück 45 von der in der Figur 2 dargestellten Trennstellung nach rechts in Richtung des zweiten Kontakts 30 bewegt werden kann.

Die Figur 2 zeigt darüber hinaus Schraubelemente 60 und 70, die eine mechanische Verbindung zwischen dem ersten Kontakt 20 und dem Isolationsrohr 40 bzw. zwischen dem zweiten Kontakt 30 und dem Isolationsrohr 40 herstellen.

Die Figur 3 zeigt die Kurzschließereinrichtung 10 gemäß den Figuren 1 und 2, nachdem das Bewegkontaktstück 45 von der in der Figur 2 dargestellten Trennstellung in seine Kontaktstellung überführt worden ist. Es lässt sich erkennen, dass das Bewegkontaktstück 45 - gegenüber der Darstellung in Figur 2 - entlang der Schieberichtung S von links nach rechts bewegt worden ist und in der Kontaktstellung den ersten Kontakt 20 mit dem zweiten Kontakt 30 elektrisch verbindet.

Mit Blick auf einen niedrigen Kontaktwiderstand wird es als vorteilhaft angesehen, wenn sich das Bewegkontaktstück 45 in Richtung des zweiten Kontakts 30 konusförmig verjüngt und bei Erreichen der Kontaktstellung in einen formkomplementären Hülsenabschnitt des zweiten Kontakts 30 einfährt.

Das Bewegkontaktstück 45 und das Isolationsrohr 40 sind vorzugsweise rotationssymmetrisch, und das Bewegkontaktstück 45 ist bevorzugt koaxial zum Isolationsrohr angeordnet.

Die Bewegung des Bewegkontaktstücks 45 erfolgt durch Explosionsgas EG, das von dem pyrotechnischen Antrieb 50 nach einem Zünden mittels des Zündsignals ZS erzeugt wird.

In der in der Figur 3 dargestellten Kontaktstellung verbindet das Bewegkontaktstück 45 den ersten Kontakt 20 elektrisch mit dem zweiten Kontakt 30 bzw. bewirkt einen Kurzschluss zwischen den beiden Kontakten 20 und 30.

Ein wesentlicher Vorteil der Kurzschließereinrichtung 10 gemäß den Figuren 1 bis 3 besteht - im Vergleich bzw. im Unterschied zu Kurzschließereinrichtungen nach dem Stand der Technik - darin, dass das Isolationsrohr 40 die Kurzschließereinrichtung 10 nach außen vollständig verschließt und weder das Explosionsgas EG noch einen beim Kurzschließen auftretenden Lichtbogen oder die durch einen solchen Lichtbogen erzeugte heiße und/oder ionisierte Luft (Plasmawolke) nach außen dringen lässt.

Die Kurzschließereinrichtung 10 gemäß den Figuren 1 bis 3 lässt sich vorteilhaft zum Kurzschließen von Transistoreinrichtungen, insbesondere Bipolartransistoren mit isolierter Gate-Elektrode, und zum Kurzschließen von Submodulen von Umrichtern, insbesondere von Multilevelumrichtern, einsetzen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Kurzschließereinrichtung
- 20: erster Kontakt
- 30: zweiter Kontakt
- 40: Isolationsrohr
- 45: Bewegkontaktstück
- 50: Antrieb
- 60: Schraubelemente
- 70: Schraubelemente

- d: Wandstärke
- EG: Explosionsgas
- S: Schieberichtung
- ZS: Zündsignal

## Patentansprüche

1. Elektrische Kurzschließereinrichtung (10) mit einer elektrischen Kontaktanordnung, die aufweist:
- einen ersten und einen zweiten Kontakt (20, 30), die voneinander durch eine Gasstrecke getrennt sind,
- ein Bewegkontaktstück (45), das in einer Trennstellung vom zweiten Kontakt (30) getrennt ist und in einer Kontaktstellung den ersten und zweiten Kontakt (20, 30) miteinander verbindet, und
- einen Antrieb (50) zum Bewegen des Bewegkontaktstücks (45) von der Trennstellung in die Kontaktstellung,
**dadurch gekennzeichnet, dass**
das Bewegkontaktstück (45) im Inneren eines aus nichtleitendem Material bestehenden Isolationsrohres (40) angeordnet ist.

2. Kurzschließereinrichtung (10) nach Anspruch 1,
**dadurch gekennzeichnet, dass**
das Isolationsrohr (40) aus faserverstärktem, insbesondere glasfaserverstärktem, Kunststoff besteht.

3. Kurzschließereinrichtung (10) nach einem der voranstehenden Ansprüche,
**dadurch gekennzeichnet, dass**
das Isolationsrohr (40) den ersten und zweiten Kontakt (20, 30) mechanisch verbindet und gemeinsam mit dem ersten und zweiten Kontakt (20, 30) nach außen verschließt.

4. Kurzschließereinrichtung (10) nach einem der voranstehenden Ansprüche,
**dadurch gekennzeichnet, dass**
die Kurzschließereinrichtung (10) einen pyrotechnischen Antrieb (50) aufweist, der bei Anliegen eines elektrischen Zündsignals (ZS) gezündet wird und das Bewegkontaktstück (45) in eine lineare Schubbewegung innerhalb des Isolationsrohres (40) versetzt.

5. Kurzschließereinrichtung (10) nach einem der voranstehenden Ansprüche,
**dadurch gekennzeichnet, dass**
das Isolationsrohr (40) und das Bewegkontaktstück (45) rotationssymmetrisch sind.

6. Kurzschließereinrichtung (10) nach einem der voranstehenden Ansprüche,
**dadurch gekennzeichnet, dass**
das Bewegkontaktstück (45) koaxial zum Isolationsrohr (40) angeordnet ist.

7. Kurzschließereinrichtung (10) nach einem der voranstehenden Ansprüche,
**dadurch gekennzeichnet, dass**
sich das Bewegkontaktstück (45) in Richtung des zweiten Kontakts (30) konusförmig verjüngt und bei Erreichen der Kontaktstellung in einen formkomplementären Hülsenabschnitt des zweiten Kontakts (30) einfährt.

8. Kurzschließereinrichtung (10) nach einem der voranstehenden Ansprüche,
**dadurch gekennzeichnet, dass**
der erste und zweite Kontakt (20, 30) voneinander durch eine Luftstrecke getrennt sind.

9. Kurzschließereinrichtung (10) nach einem der voranstehenden Ansprüche,
**dadurch gekennzeichnet, dass**
die Kurzschließereinrichtung (10) einen Kurzschlussschalter zum Überbrücken von Submodulen eines Umrichters bildet.

10. Transistoreinrichtung, insbesondere Bipolartransistor mit isolierter Gate-Elektrode,
**dadurch gekennzeichnet, dass**
die Transistoreinrichtung mindestens eine Kurzschließereinrichtung (10) nach einem der voranstehenden Ansprüche aufweist.

11. Umrichter, insbesondere Multilevelumrichter, mit einer Mehrzahl an Submodulen,
**dadurch gekennzeichnet, dass**
der Umrichter mindestens eine Kurzschließereinrichtung (10) nach einem der voranstehenden Ansprüche 1 bis 9 und/oder mindestens eine Transistoreinrichtung nach Anspruch 10 aufweist.

12. Umrichter nach Anspruch 11,
**dadurch gekennzeichnet, dass**
die Kurzschließereinrichtung (10) über keinen oder mindestens einen Transistor oder über keine oder mindestens eine Diode zu einem der Submodule parallel geschaltet ist.

13. Umrichter nach einem der voranstehenden Ansprüche 11-12,
**dadurch gekennzeichnet, dass**
die Kurzschließereinrichtung (10) zu einem Kondensator des Submoduls parallel geschaltet ist und nach Übergang des Bewegkontaktstücks (45) von der Trennstellung in die Kontaktstellung den Kondensator des Submoduls kurzschließt.

14. Umrichter nach einem der voranstehenden Ansprüche 11-12,
**dadurch gekennzeichnet, dass**
die Kurzschließereinrichtung (10) zu einem Kondensator des Submoduls über mindestens einen Transistor oder über mindestens eine Diode parallel geschaltet ist und nach Übergang des Bewegkontaktstücks (45) von der Trennstellung in die Kontaktstellung mindestens ein Submodul eines Umrichters kurzschließt.

15. Umrichter nach einem der voranstehenden Ansprüche 11-14,
**dadurch gekennzeichnet, dass**
alle Submodule des Umrichters jeweils mit einer Kurzschließereinrichtung (10) nach einem der voranstehenden Ansprüche ausgestattet sind.
